# EUROPEAN PATENT APPLICATION

(11) **EP 2 637 384 A1**
(43) Date of publication of application: **11.09.2013**
(21) Application number: 12425051.5
(22) Date of filing: 09.03.2012
(51) Int. Cl.: H04L 29/08, H04L 12/28, G05D 23/19, F24F 11/00, E06B 5/00

(54) **Movable wall and system with environmental condition optimisation functions**

(71) Applicant: Bruno & Partner S.R.L., 20122 Milano (IT)
(72) Inventor: Bruno, Davide Maria, 20129 Milano (IT); Merra, Monico, 10154 Torino (IT); Paracchini, Luigi, 28040 Varallo Pombia, Novara (IT); Fusar Poli, Elena Orsola, 20011 Corbetta, Milano (IT); Giola, Franco, 20010 Boffalora Sopra Ticino, Milano (IT); Cambiaghi, Alberto, 20855 Lesmo, Monza e Biranza (IT)
(74) Representative: Carangelo, Pierluigi

(57) **Abstract**

There is described a movable wall (1) with environmental condition optimisation functions, which in addition to a wall structure (10), comprises further elements, integrated in the wall structure, capable of carrying out environmental condition optimisation functions in a coordinated manner. In particular, such elements integrated in the movable wall comprise environmental condition sensor means (20), a control module (30) and actuating means (40).

The sensor means (20) comprise at least one environmental condition sensor module (20), configured for measuring a value of a respective environmental condition and for generating at least one respective environmental condition electrical measurement signal (SM1-SM3) based on the measured value.

The control means (30) comprise a control module (30) configured for generating at least one environmental condition control signal (SC1-SC3), based on the at least one environmental condition electrical measurement signal (SM1-SM3).

The actuating means (40) are configured for influencing the environmental condition and modifying it in a way depending on the at least one environmental condition control signal (SC1-SC3).

There are also described a system and a method for optimising the environmental conditions in variably sized spaces, wherein the system comprises at least one movable wall (1) according to the invention and likewise, the method operates on the basis of at least one movable wall (1) according to the invention.

## Description

### TECHNOLOGICAL BACKGROUND OF THE INVENTION

### Field of application.

The present invention relates to the field of control of indoor environmental conditions. In particular, the invention relates to a movable wall with environmental condition optimisation functions, as well as a system comprising such movable wall, and an environmental condition optimisation method.

### Description of the prior art.

Several solutions are known within the scope of indoor environmental condition control, referred to different types of environmental conditions into a space or room (for example temperature, humidity, light).

Usually, such different environmental conditions are separately controlled, each by a dedicated device or system.

For example, conditioning and/or climate control systems are well known, capable of adjusting the temperature and/or humidity of a room based on user controls, typically depending on a setting of desired values. In that case, the conditioning systems are provided with temperature and/or humidity sensors and are capable of adjusting their operation so as to reach the desired values of the environmental variables to be controlled, starting from the values measured by the sensors.

As regards lighting, there are systems capable of providing an intensity and direction adjustable lighting, based on user controls or on the sensing of a measured background light level.

It should be noted that the above known systems for controlling the environmental conditions are usually designed and installed separately from each other. Moreover, the design of a specific system for a specific indoor space (space, room) keeps into account the volume, the surface and the features of such indoor space, which are assumed to be fixed.

On the other hand, the need and opportunity of providing methods for creating and delimiting indoor spaces is increasingly felt, for both offices and homes, wherein the indoor spaces should be variable according to incidental needs, and therefore versatile and flexible. To this end, solutions are known which are based on movable walls that may be arranged with great versatility so as to delimit variably sized spaces.

For example, a movable wall in addition to three fixed walls may partition a room into two variably sized small meeting rooms according to the needs related to the daily use.

A further example is the arrangement of movable walls for creating "boxes" for single operators, within an *"open space"* for offices. In that case, the arrangement of the movable walls is semi-permanent but can in any case be changed if needed.

It should be noted that a variable partition of indoor spaces may cause problems related to the environmental condition control, since as already noted the known systems for controlling the environmental conditions are designed to optimally operate in spaces having fixed and predetermined size. When such spaces are changed, for example with a movable wall, the "fixed" systems for controlling the environmental conditions may not operate optimally.

Moreover, when variable spaces are delimited, an optimal response to needs related to a particular environmental condition (for example temperature) may be totally independent relative to an optimal response to needs due to another environmental condition (for example lighting).

Therefore, the need of combining the possibilities of allocating indoor spaces in a flexible and versatile manner, while allowing the optimisation of one or more environmental conditions in such variable spaces, is strongly felt.

The known solutions mentioned above do not provide globally satisfactory responses to such need.

The object of the present invention is to devise and provide improved movable walls so as to meet the above needs, and allow a method for optimising the environmental conditions in variably sized indoor spaces capable of obviating the drawbacks mentioned above with reference to the prior art.

### SUMMARY OF THE INVENTION

Such object is achieved by a movable wall according to claim 1.

Further embodiments of the movable wall are defined in the dependent claims 2 to 12.

A system for optimising the environmental conditions in variably sized spaces according to the invention is defined in claim 13.

Further embodiments of such system are defined in claims 14-15.

A method for optimising the environmental conditions in variably sized spaces according to the invention is defined in claim 16.

### BRIEF DESCRIPTION OF THE DRAWINGS

Further features and advantages of the method and apparatus according to the invention will appear more clearly from the following description of preferred embodiments thereof, given by way of a non-limiting example with reference to the annexed figures, wherein:
- figure 1 shows a front view of a movable wall according to a preferred embodiment of the present invention;
- figure 2 shows a functional block diagram of a movable wall according to the invention;
- figure 3 shows a side cutaway view of the movable wall of figure 1 along plane A-A;
- figure 4 shows a side cutaway view of the movable wall of figure 1 along plane B-B;
- figures 5 and 6 show two details of the side cutaway view of figure 4;
- figure 7 shows a functional block diagram of an environmental condition optimisation system according to a further example of the invention.

### DETAILED DESCRIPTION.

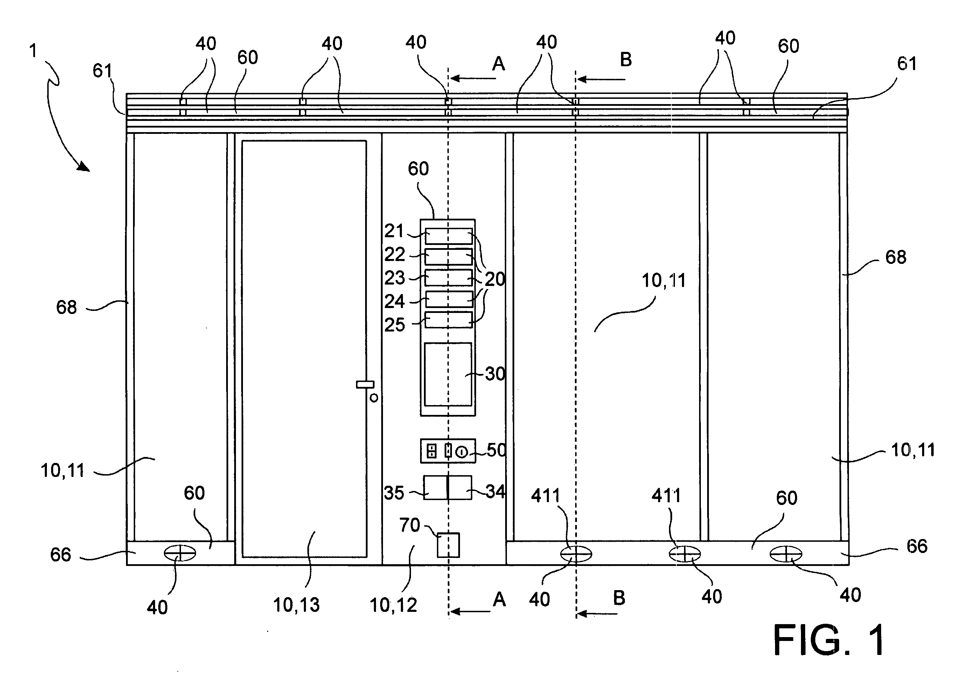

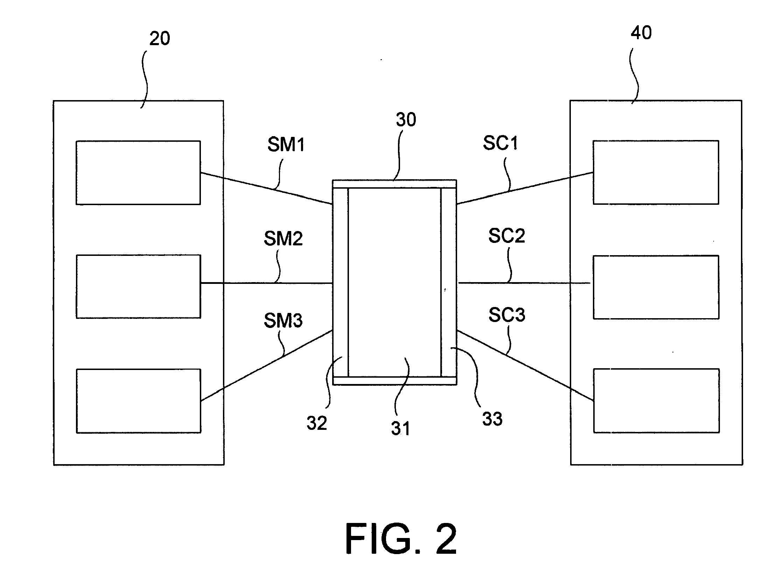

According to a preferred embodiment of the present invention (shown in figures 1-6), a movable wall 1 with environmental condition optimisation functions first of all comprises a wall structure 10; then, it comprises sensor means 20, wherein at least one environmental condition sensor module 21-25 integrated in the wall structure is configured for measuring a value of a respective environmental condition and for generating, based on the value measured, at least one respective environmental condition electrical measurement signal (or more simply, "measurement signal") SM1-SM3.

The movable wall 1 further comprises control means 30, wherein a control module 30 integrated in the wall structure is configured for generating at least one environmental condition control signal (or more simply, "control signal") SC1-SC3, based on the at least one environmental condition electrical measurement signal SM1-SM3 mentioned above.

In addition, the movable wall 1 comprises actuating means 40 integrated in the wall structure, configured for influencing the environmental condition and modifying it in a way depending on the at least one environmental condition control signal SC1-SC3.

By environmental condition, herein and hereafter, it is meant an environmental condition that may be controlled, i.e., for example only and not for limiting purposes limiting, temperature or humidity, or pressure or light level, or sound level (i.e. acoustic level) related for example to soundproofing properties.

It should be noted that the movable wall according to the invention may operate on only one or all, or on any partial combination of the environmental conditions, in an independent or related manner.

In accordance therewith, the sensor means 20 comprised within the movable wall may for example be one or more temperature sensors or thermometers 21; one or more pressure sensors or barometers 22; one or more humidity sensors or hygrometers 23; one or more light level sensors or photocells 24; one or more sound condition sensors or phonometers 25.

The movable wall 1 according to the invention may therefore comprise any combination of one or more sensors of the types mentioned above.

On the other hand, again according to the above, the actuating means (or actuator means) 40 comprised within the movable wall may for example be an adjustable conditioned air distribution unit 41; a heating module; a ventilator module or fan; a humidification module or humidifier 42; a lighting module or lamp 43; a variable configuration sound-absorbing module 44.

The movable wall according to the invention may therefore comprise any combination of one or more actuating means of the types mentioned above.

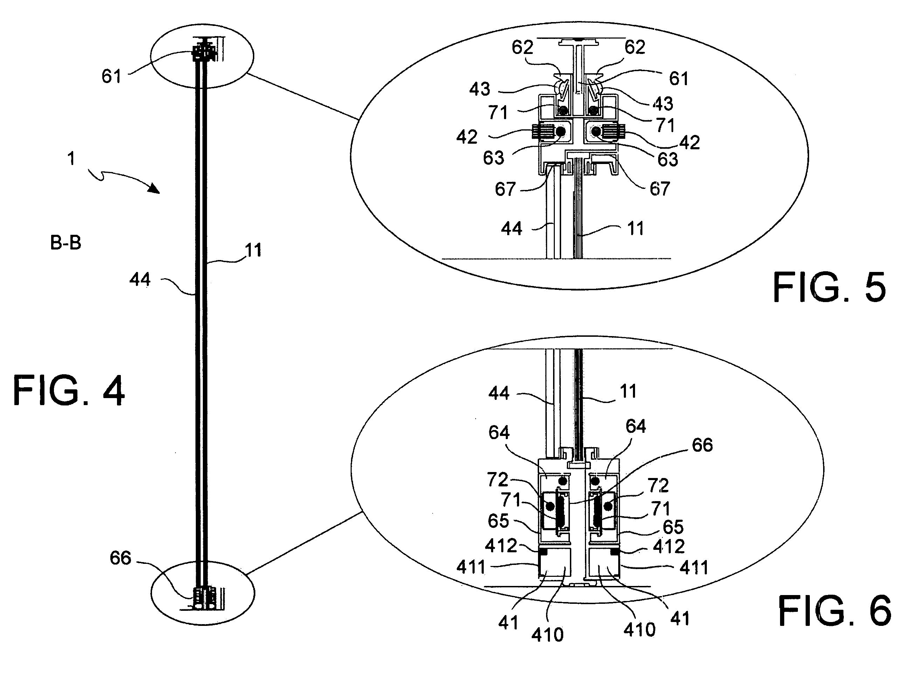

With reference to the adjustable conditioned air distribution unit 41, it is noted that in one particular embodiment shown in fig. 6, it may comprise at least one air conduit 410 built in the wall. Such air conduit is set up for conducting conditioned and/or humidified air and has at least one delivery outlet 411, with a respective opening, of adjustable size, to the environment, adapted to deliver the conditioned and/or humidified air. Moreover, the adjustable conditioned air distribution unit 41 comprises opening adjustment means 412 configured for adjusting the adjustable size of the opening of the at least one delivery outlet based on one of the above environmental condition control signals SC1-SC3.

According to a further embodiment, the adjustable conditioned air distribution unit 41 further comprises at least one inlet opening and at least one outlet opening (not shown in the figures), respectively connected to the air conduit 410 to let the conditioned and/or humidified air enter therein and exit therefrom, respectively.

It should be noted that in another embodiment, the movable wall may also comprise environmental condition setting means 50 configured for interoperating with said actuating means based on user controls so as to influence the environmental condition.

The environmental condition setting means 50 may be further configured for interoperating with the control means 30 comprised within the movable wall.

The environmental condition setting means 50, in different embodiments, for example are one or more switches; a thermostat; a conditioning control module; a light intensity regulator.

The movable wall 1 according to the invention may therefore comprise any combination of one or more adjustment means of the types mentioned above.

With reference to the control module 30 of the movable wall 1, it should be noted that in one embodiment it comprises an electronic processor 31 and moreover an input control interface 32 for receiving the at least one environmental condition electrical measurement signal SM1-SM3, and an output control interface 33, for providing the at least one environmental condition control signal SC1-SC3.

In one particular embodiment, the control module 30 is set up for receiving a plurality of environmental condition electrical measurement signals SM1-SM3, corresponding to a plurality of respective environmental conditions, and is configured for generating each of the at least one control signal SC1-SC3 based on a combination of such plurality of electrical measurement signals.

Typically, the measurement signals SM1-SM3 are generated by the sensor means 20 of the movable wall 1.

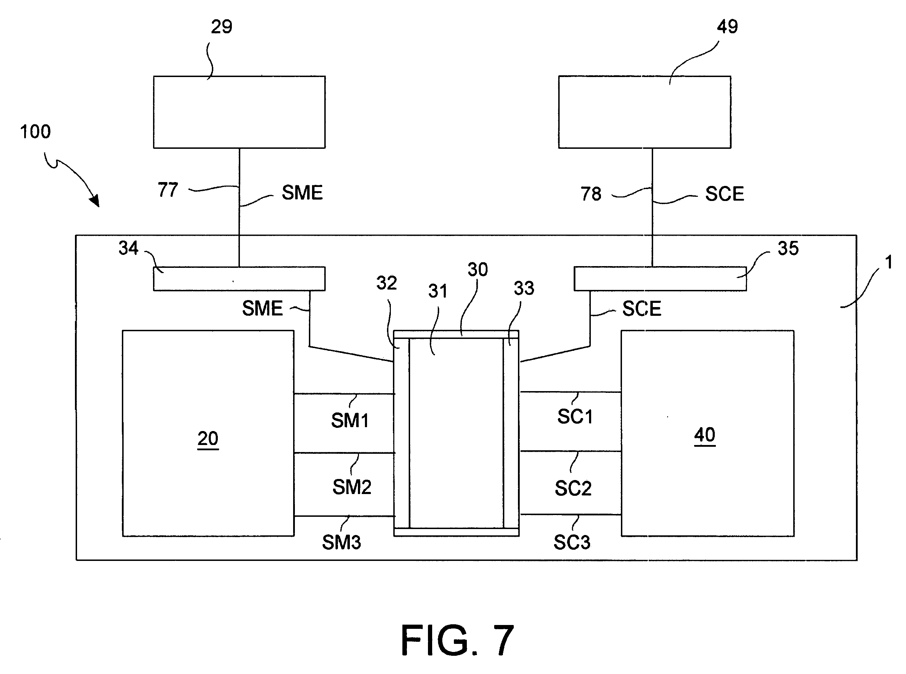

In some embodiments of the invention, however (as shown for example in fig.7), some of such measurement signals may advantageously be coming from outside the wall. For example, they may be coming from sensor means 29 installed in other fixed walls of the room, or external front walls.

To this end, in these cases, the movable wall further comprises a first external interface 34 configured for receiving the at least one further measurement signal SME, coming from outside the movable wall.

Likewise, it should be noted that typically, the control signals SC1-SC3, generated by the control means 30, are sent to the actuating means 40 comprised within the same movable wall 1.

In some embodiments of the invention, however, some of such control signals may advantageously be provided to actuating means 49 provided outside the movable wall, for example installed in other fixed walls of the room, or in external front walls. In this way it is possible for the outer actuating means 49 to also synergically cooperate with the actuating means 40 of the movable wall 1 in order to optimise the environmental conditions. The synergy may be obtained thanks to the fact that the control function is ensured by the control means 30 of the movable wall 1, which can thus become a sort of control unit, provided to an entire conditioning environment.

To this end, in this case, the movable wall 1 further comprises a second external interface 35 configured for providing the at least one further control signal SCE, outside of the wall.

The first 34 and the second external interface 35 shall also be indicated hereinafter as "data communication interface 34, 35".

As already mentioned, the sensor means 20, the control means 30 and the actuating means 40 are integrated (i.e. built) in the structure 10 of the movable wall 1 so that the installation of the movable wall 1 in the desired position to form a space per se implies the installation of the base elements required for carrying out the environmental condition optimisation functions.

To this end, according to an embodiment, the movable wall comprises housing means 60 adapted to house at least one of said sensor means 20, control means 30 and actuating means 40, thus integrating it within the wall structure 10.

The housing means 60 may comprise one or more seats 61-65.

For example, the movable wall may be provided with a top horizontal profile 61 shaped so as to comprise one or more of such seats 62, 63.

According to a further example, the movable wall may comprise a dedicated module, so-called "technical module" 12, shaped so as to comprise housing means 60 therein.

Said housing means 60, besides containing the sensor means 20 and/or the control means 30 and/or the actuating means 40, may be further set up for housing a wiring 71, 72. in that way, they can carry out the further function of allowing the connections (and thereby the operating connections already mentioned before) between various elements included in the movable wall and any external interface elements.

In fact, it should be noted that the movable wall comprises a communication wiring 72, configured for allowing the suitable transmission/reception of the measurement SM1-SM3 and control signals SC1-SC3.

In a further embodiment, the communication wiring 72 is also connected to the data communication interface 34, 35.

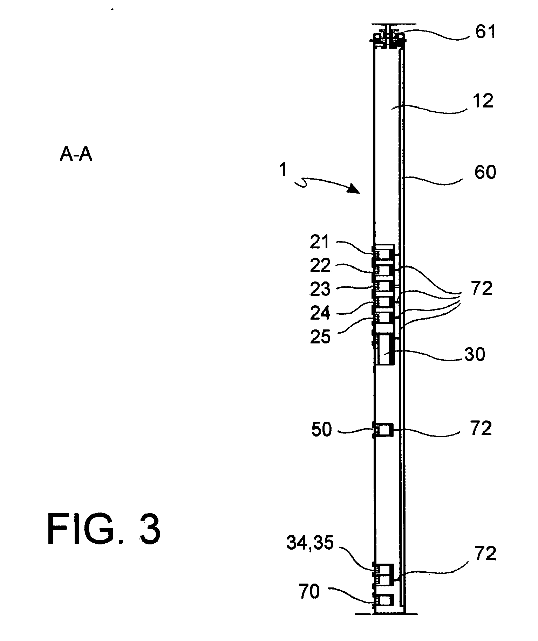

In one embodiment, the movable wall may comprise one or more electrical sockets 70 and a power supply wiring 71 (not shown in the section of fig. 3 but shown in fig. 6), connected to the electrical sockets and to one or more elements of the same movable wall. It should be noted that both high (e.g. 220 V) and low (e.g. 12 V) voltage electrical sockets and relevant wiring may be provided within the movable wall.

Considering now the structure of the movable wall, it may be noted that it is modular since it comprises at least one module, and typically multiple modules 11, 12, 13. One of such modules may be the above mentioned technical module 12, which advantageously integrates several sensor, control and actuating means in the wall. Each module may for example comprise one or more respective panels.

According to an embodiment, each one of the panels comprises an extruded section bar frame.

According to different embodiments of the invention, such panel may be made of aluminium (often preferable for its properties) or other materials, among which wood, or other metal, composite, ceramic or polymeric materials.

The above panels, frames and thus the modules are configured for forming a single structure when installed.

Advantageously, according to an exemplary embodiment, the wall structure also comprises at least one opening panel, or more specifically, at least one door (or door module) 13. According to another embodiment, the wall structure further comprises one or more windows.

According to a further embodiment, one or more of the wall structure panels are made of glass, or with other transparent or translucent material.

In one particular exemplary embodiment, in addition to the above top profile 61, the movable wall 1 also comprises a bottom profile 66. The top 61 and bottom profiles 66 are configured both for fixing the module panels to the wall, thus having anchoring functions, and for containing and/or forming the housing means 60 themselves.

The top 61 and bottom profiles 66 are shown in detail in figures 5 and 6, respectively.

Such profiles have different functions and are designed so as to allow and facilitate the installation and housing of the most varied combinations of sensor and actuating means. For example, they comprise cavities having special dimensions and shapes, configured for containing the built-in environmental condition sensors, as well as the control terminals and the various actuating means.

It should also be noted that in one embodiment of the invention, such profiles are symmetric, in section, as they are set up for carrying out their functions on both sides of the movable wall.

In fact, in one particularly advantageous embodiment of the invention, the movable wall is capable of bi-laterally acting on both one side and the other, thus providing an environmental condition optimisation function on two different spaces that it contributes to delimiting.

In order to optimise the installation of the movable wall to a desired position, or the relative removal, the movable wall may comprise per se known anchoring means to fixed walls whereto the movable wall must be constrained.

Such anchoring means may comprise side anchoring means, comprised within side profiles 68 of the movable wall, and be made for example with extruded profiles fixable to the fixed wall (or pillar) whereto the movable wall must be anchored by means of a metal plate.

There are also provided anchoring means on the bottom and top side of the movable wall for allowing an adequate anchoring to a floor and to a ceiling, respectively, and for ensuring a satisfactory sound and heat insulation of the space that the movable wall contributes to delimiting.

The movable wall may further comprise per se known positioning and handling means configured for allowing a variable positioning thereof.

In further embodiments, the movable wall may further comprise a fixing groove 67, for example arranged in the above top horizontal profile 61, configured for fixing one or more sound panels 44, or one or more heating modules (for example, thermal panels).

According to an embodiment, not shown in the figures, the movable wall may comprise at least one side groove, within a respective side profile 68, for housing the above first and second external interfaces, or the relative wiring, and/or the electrical sockets. Such at least one side groove may be set up for cooperating with a corresponding fixed groove, which may be in a fixed wall, in a position whereat the movable wall must be installed. Such embodiment has the advantage of an easier operating connection between the movable wall and the outside, when such operating connection is provided.

According to other particular embodiments, not shown in the figures, the movable wall may further comprise fixing means for accessories, as well as one or more different accessories (for example one or more shelves, one or more working top shelves, one or more compartments, one or more container element), fixed by the fixing means according to a wide range of per se known methods and configurations.

It has already been noted that the movable wall according to the invention can act on any combination of the environmental conditions mentioned above and may therefore comprise many different combinations of sensors and actuators, for example of the types mentioned above.

In the embodiments that act on only one or a subset of environmental conditions, the movable wall may be similar to the movable wall depicted in fig. 1, from the structural point of view. In fact, housing means 60 may in any case be provided for several types of sensors and actuators, where such housing means shall be entirely or partly equipped according to the specific environmental conditions to act upon.

As an alternative, further embodiments of the invention (not shown) provide for the movable wall to comprise housing means only for the sensor and actuating means of the specific subset of environmental conditions on which the movable wall must act.

Some exemplary embodiments of the present invention shall be illustrated hereinafter in more detail, considering the peculiar aspects of each example.

Let's consider a movable wall capable of optimising temperature, humidity and pressure of a space partly delimited by the movable wall.

The temperature sensors may be per se known thermometric sensors capable of sensing the temperature and generating a corresponding temperature electrical measurement signal.

One or more temperature sensors 21 may be provided, arranged in suitable positions (in the technical module, as shown in fig. 1, or in other positions, for example in the top or bottom profiles) for sensing temperature conditions even in different points of the space. The number of temperature sensors may be any, and of course it may vary according to the dimensions of the delimited space.

The humidity sensors may be per se known hygrometric sensors capable of sensing the environmental humidity and generating a corresponding humidity electrical measurement signal.

One or more humidity sensors 23 may be provided, arranged in suitable positions (in the technical module, as shown in fig. 1, or in other positions, for example in the top or bottom profiles) for sensing humidity conditions even in different points of the space. The number of humidity sensors may be any, and of course it may vary according to the dimensions of the delimited space.

The pressure sensors may be per se known barometric sensors capable of sensing the environmental pressure and generating a corresponding pressure electrical measurement signal.

One or more pressure sensors 22 may be provided, arranged in suitable positions (in the technical module, as shown in fig. 1, or in other positions, for example in the top or bottom profiles) for sensing pressure conditions even in different points of the space. The number of pressure sensors may be any, and of course it may vary according to the dimensions of the delimited space.

The temperature, humidity and pressure electrical measurement signals are sent through the communication wiring 72 to the control module 30, housed for example in the technical module 12.

The control module 30 receives the pressure, temperature and humidity measurement signals and based thereon, or on combinations thereof, generates one or more control signals for each one of the corresponding actuating means.

The control signals are provided to the actuating means through the communication wiring 72.

The communication wiring 72 may be housed in different ways, for example along dedicated guides within the movable wall modules and/or behind a baseboard 65 provided in the bottom profile 66 of the movable wall 1.

In this example, the actuating means 40 comprise one or more humidifying modules or humidifiers 42 and the adjustable conditioned air distribution unit 41.

Humidifiers 42 are per se known modules. They are arranged within the top profile 61 of the wall, in dedicated seats 63. The number of humidifying modules may vary according to the dimensions of the delimited space.

The humidifying modules 42 are capable of delivering humidified air according to a respective humidity control signal generated by the control module. The amount of humidified air delivered may be constant or in turn adjustable based on the control signal. The humidity level of the humidified air delivered may be constant or in turn adjustable based on the control signal.

According to an embodiment, humidifiers 42 comprise copper conduits built in the movable wall for conveying and nebulising water vapour which is then released to the environment through dedicated openings.

The conditioned air distribution unit 41 comprises a conditioned air conduit 410 adapted to deliver conditioned (that is, having controlled variable temperature and pressure) and/or humidified air which conduit 410 is built in wall 1, for example in the bottom profile 66.

In other different embodiments, such conduit develops according to a rectilinear, curvilinear path or along any path along the wall.

In some further embodiments, multiple conduits may be comprised within the movable wall, for example arranged parallel to each other.

The conditioned air conduit 410 comprises a plurality of delivery outlets 411 distributed along the conduit path. Each outlet may be provided with a respective opening to the environment having adjustable size, adapted to deliver the conditioned and/or humidified air.

The adjustable size may provide for two possible positions, that is, fully open and fully closed, or intermediate positions as well.

The first option is advantageous if there are several outlets: in fact in that case the fine adjustment of the conditioned air delivered depends on the number of open outlets relative to the total, and half-open or half-closed outlets need not be provided.

Conversely, if the number of outlets is limited, in order to obtain a fine adjustment of the conditioned air delivered it is necessary to have different partial opening configurations of the outlets, in addition to the open and closed configurations.

It should be noted that the conditioned air distribution unit 410 further comprises opening adjustment means 412 configured for adjusting the adjustable size of the opening of the delivery outlets 411. In the embodiment described herein, such opening adjustment means consist of movable ports or baffles arranged at the outlet openings, the movement whereof is controlled by the control signals by per se known micro-actuators.

Since the actuation is carried out on every single outlet, several different overall configurations are possible, controlled by the control module by means of a plurality of control signals. The different configurations relate to the different possible open/close combinations (optionally semi-opening) of the different outlets.

Accordingly, several different conditioned air flow rate levels may be delivered through the outlets and released to the environment, for obtaining a desired conditioning effect.

Moreover, it should be noted that the adjustable conditioned air distribution unit further comprises at least one inlet opening and at least one outlet opening (not shown in the figures), respectively connected to the conditioned air conduit 410 to let the conditioned and/or humidified air enter therein and exit therefrom. Such openings are in turn configured for being connected to an external conditioned air source, for example installed in fixed walls adjacent to the movable wall.

The external conditioned air may be at predetermined temperature, humidity and pressure levels or it may provide for different levels, also controlled by the control signals coming from the movable wall, as shall be explained hereinafter.

Thanks to the above it is possible to have a continuous flow of conditioned air, for example constant flow within the conditioned air conduit 410.

Moreover, thanks to the fact that the delivery outlets 411 have a controlled variable opening, it is possible to release any percentage of the conduit flow rate to the environment.

It is therefore possible to obtain an adjustment of both the flow rate and the spatial distribution of the conditioned air delivered, thus optimising the environmental conditions in a way determined by the control module 30 comprised within the same movable wall.

It should be noted that in various embodiments, in order to make the effect of the movable wall even more versatile, it is possible to have multiple inlet openings and multiple outlet openings, for example communicating with external conduits wherefrom air at different temperatures and humidity comes; and it is also possible to control the closing and opening of such inlet/outlet openings, again through the control means 30 of the movable wall, so as to have a further degree of freedom in the control of temperature and humidity.

The pivotal role of the control means 30 is clear from the above: on the one hand, they are provided with a plurality of temperature, humidity and pressure measurement signals (which may be cumulative signals or specific signals of particular spatial points); on the other hand, they are connected to a plurality of actuating means to influence temperature, humidity and pressure (for example as indicated above) in a cumulative or spatially targeted manner; moreover, the control module 30 may control the actuating means through a respective plurality of control signals.

Thanks to these features, the control module 30 of the movable wall is capable of autonomously actuating a very large plurality of control strategies, for example through a plurality of per se known software programs preinstalled in the processor 31.

For example, a strategy may be implemented wherein when the temperature is within a predetermined range deemed acceptable, conditioned air is not delivered. When the temperature is above or below thresholds that define such range, colder or warmer, less humid or more humid, lower or higher pressure air is delivered, with a flow rate controlled by the outlet opening configuration, as already described.

On the other hand, it is also possible to implement more sophisticated strategies that keep into account the spatial distribution of sensed/desired humidity and temperature.

As already illustrated, in one embodiment the control module 30 may be connected to the first external interface 34 that allows external measurement signals SME to be received.

Moreover, the control module 30 may be connected to the second external interface 35 that allows external control signals SCE generated on the basis of the conditions locally sensed by the movable wall to be provided to external conditioning systems. Such systems may belong to an external conditioning system adapted to control temperature and humidity of the air delivered into the adjustable conditioned air distribution unit of the movable wall; or to a fixed wall; or to a further movable wall according to the invention.

Finally, it should be noted that in different embodiments, the actuating means 40 may comprise heating modules (for example electrically powered thermal panels) or ventilator elements built in the movable wall and controlled as described above. In such embodiments, the movable wall may influence the temperature conditions even without having to include an adjustable conditioned air distribution unit, thereby increasing the operating autonomy.

Let's now consider a movable wall according to the invention, capable of optimising the light level conditions of a space partly delimited by the movable wall.

From the structural point of view, such movable wall is similar to the movable wall already illustrated above.

The control strategy it also totally similar, based on the sensing of the light level through suitable sensors; on the generation of respective measurement signals; on the transmission of such measurement signals to a control module; on the generation of light control signals by the control module based on a predetermined strategy; on the transmission of such control signals to respective actuating means; on the action of the actuating means for influencing the light level.

Therefore, hereinafter we shall only focus on the specific aspects of such exemplary embodiment, that is, on the light level sensor means 24 and on the light level actuating means, or lighting modules 43.

The light level sensors 24 may be per se known sensors, for example photocells capable of sensing the light intensity and generating a corresponding light intensity electrical measurement signal.

One or more light level sensors may be provided, arranged in suitable positions within the seat on the top profile of the wall panels (for example in cavities especially provided in the top extruded profile of the movable wall) and/or in a dedicated seat of the technical module 12 for sensing light level conditions even in different points of the space.

The light level sensors may also be located on other pieces of furniture present in the room (e.g. an office desk) so as to determine the lighting level of the work top and optionally adjust the intensity thereof.

The number of light level sensors may be any, and of course it may vary according to the dimensions of the delimited space.

The light level actuating means 43 may be per se known light bulbs, halogen light sources, LED or controllable light sources.

One or more controllable light sources may be provided, arranged in suitable positions for diffusing light in the room in a controlled manner.

The light sources may be diffused light sources built in the movable walls, arranged within the top profile 61 in suitable seats 62.

The light sources may also be direct light sources, in such case being also arranged in positions of the room other than the movable walls.

In some embodiments of the movable wall, the light sources may be such as to only allow the two on/off configurations. In that case, the light level control strategy is carried out by controlling the number and position of the light sources to be turned on/off.

In other embodiments, the light sources may be such as to also allow the emitted light intensity to be controlled. In that case, the light level control strategy may benefit from such further degree of freedom for optimising the light conditions in the room.

Let's now consider a movable wall according to the invention, capable of optimising acoustic and/or sound level conditions of a space partly delimited by the movable wall.

From the structural point of view, such movable wall is similar to the movable wall already illustrated above.

The control strategy it also totally similar, based on the sensing of sound (i.e., acoustic) conditions through suitable sensors; on the generation of respective measurement signals; on the transmission of such measurement signals to a control module; on the generation of sound level control signals by the control module based on a predetermined strategy; on the transmission of such control signals to respective actuating means; on the action of the actuating means for influencing the sound level (for example, in terms of soundproofing) of the room.

Therefore, hereinafter we shall only focus on the specific aspects of such exemplary embodiment, that is, on the sound condition sensor means 25 and on the respective actuating means.

The sound condition sensors 25 may be per se known sensors, for example phonometers capable of sensing a sound level or intensity and generating a corresponding electrical measurement signal of such sound level.

One or more sound condition sensors may be provided, arranged in suitable positions within the seat on the top profile of the wall panels and/or in a dedicated seat of the technical module 12 for sensing sound conditions even in different points of the space.

The number of sound condition sensors 25 may be any, and of course it may vary according to the dimensions of the delimited space.

In this case, the actuating means may be sound-absorbing panels 44 in a different number, thickness and arrangement.

As shown in fig. 4, a sound-absorbing panel 44 may be inserted in a dedicated fixing groove 67 provided in the top profile 61 of the movable wall.

The sound-absorbing panels 44 may be manually or automatically positioned, for example by per se known micro-actuators.

If for example the sound insulation of a room needs to be increased, the noise levels perceived within the room may be sensed in test conditions by the sound condition sensors; and then control signals may be generated for moving said sound-absorbing panels, for example within air spaces set up within the movable wall for increasing or decreasing the "actual thickness" of the movable wall and the sound-insulating properties thereof.

Some embodiments of a system for optimising the environmental conditions 100 into variably sized spaces according to the present invention shall now be described.

According to an embodiment, the system for optimising the environmental conditions into variably sized spaces comprises at least one movable wall 1, according to one of the embodiments already described.

Moreover, such system comprises connecting means for electrical signals 77 and external environmental condition sensing means 29.

The external environmental condition sensing means 29 are configured for measuring a value of a respective environmental condition; generating at least one further environmental condition electrical measurement signal SME according to the measured value; and sending the at least one further electrical signal generated SME to the movable wall 1 through the connecting means for electrical signals 77.

In that case, the control module 30 of the movable wall 1 is configured for receiving the at least one further electrical measurement signal SME and for generating at least one environmental condition control signal SC1-SC3 that also depends on such further measurement signal SME.

According to an exemplary embodiment, the external environmental condition sensing means are for example adapted to be integrated in a fixed wall.

According to a further embodiment, the system for optimising the environmental conditions into variably sized spaces comprises at least one movable wall 1, according to one of the embodiments already described.

Moreover, such system comprises further connecting means for electrical signals 78 and external actuating means 49 configured for influencing the environmental condition and modifying it in a way depending on a further control signal SCE.

In that case, the control module 30 of the movable wall is configured for sending the further control signal SCE to the at least one external actuating module through the further connecting means for electrical signals 78.

According to an exemplary embodiment, the external actuating means 49 are for example adapted to be integrated in a fixed wall.

It should be noted that the embodiments illustrated above may be provided independently of each other.

Figure 7 shows a further embodiment of the system for optimising the environmental conditions into variably sized spaces 100 which combines the two embodiments described above.

Finally, the present invention includes a method for optimising the environmental conditions in a variably sized space comprising the steps of: defining a variably sized space by at least one movable wall 1 according to any one of the embodiments described above; thereafter, measuring a value of a respective environmental condition by environmental condition sensor means 20 comprised within the movable wall 1; then, generating at least one respective environmental condition electrical measurement signal SME1-SME3 by the environmental condition sensor means 20 based on the value measured; thereafter, providing the at least one environmental condition electrical measurement signal SM1-SM3 to control means 30, also comprised within the movable wall 1; then, generating at least one environmental condition control signal SC1-SC3 by the control means 30, based on the at least one environmental condition electrical measurement signal SM1-SM3; finally, influencing the environmental condition and modifying it in a way depending on the at least one environmental condition control signal SC1-SC3 by actuating means 40, comprised within the movable wall.

It should be noted that, in different applications of the invention, the number of measurement signals SM1-SM3 may vary depending on the number of environmental conditions monitored, on the number of sensors provided for each environmental condition and on the number of signals generated by each sensor.

Moreover, in different applications of the invention, the number of control signals SC1-SC3 may vary depending on the number of environmental conditions controlled, on the number of actuators provided for each environmental condition and on the number of control signals to be provided to each actuator.

In order to cope with the most varied situations, the control module 30 may be configured for generating a single control signal based on a single respective measurement signal; or a plurality of control signals based on a single measurement signal; or a single control signal based on a plurality of measurement signals; or a plurality of control signals based on a plurality of measurement signals.

As can be seen, the object of the present invention is achieved by the movable wall, by the system and by the method described above by virtue of the features thereof.

The need for flexibility in the definition of indoor spaces, in fact, is intrinsically met by the availability of movable walls.

The further contextual need of allowing an optimisation of the environmental conditions in variable spaces is met by a movable wall according to the present invention.

In fact, such movable wall includes and integrates means therein capable of modifying and optimising one or more environmental conditions based on the sensing of the environmental conditions actually present in the variably sized space that it contributes to defining.

By way of an example only, referring to the "humidity" environmental variable, it may be noted that the presence and the functional cooperation of humidity sensors, a control module and humidifier elements in the movable wall of the present invention allows the humidity value to be optimised as desired in a way depending on the actual space delimited by the movable wall.

Totally similar remarks may be made with reference to the other environmental conditions mentioned above.

Moreover, it should be noted that the further feature of the present invention related to the possibility of sensing and modifying a plurality of environmental conditions allows a perceivable improvement of the overall quality of the delimited indoor space to be obtained; and it also allows the implementation of optional advanced control strategies, wherein a condition (for example temperature) may be determined on the basis of multiple conditions measured (for example temperature and humidity).

In addition, the possibility provided by one embodiment of the present invention to interoperate with any air conditioning systems already present in the indoor space resulting from the positioning of the movable wall offers an additional degree of freedom within the scope of the optimisation of the environmental conditions of the variable space considered.

A man skilled in the art may make several changes, adjustments and replacements of elements with other functionally equivalent ones to the embodiments of the movable wall, of the system and of the method described above, also jointly with the prior art, creating hybrid implementations, in order to meet incidental needs, without departing from the scope of the following claims. Each of the features described as belonging to a possible embodiment can be obtained independently of the other embodiments described.

Moreover, it should be noted that the term "comprising" does not exclude other elements or steps, the term "a" or "an" does not exclude a plurality. Moreover, the figures are not necessarily in scale; on the contrary, importance is usually given to the illustration of the principles of the present invention.

## Claims

1. Movable wall (1) with environmental condition optimisation functions, comprising:
- a wall structure (10);
- sensor means (20), comprising at least one environmental condition sensor module (21-25), integrated in the wall structure (10), configured for measuring a value of a respective environmental condition and for generating at least one respective environmental condition electrical measurement signal (SM1-SM3) based on the measured value;
- control means (30) comprising a control module (30) integrated in the wall structure (10), configured for generating at least one environmental condition control signal (SC1-SC3), based on said at least one environmental condition electrical measurement signal (SM1-SM3);
- actuating means (40) integrated in the wall structure (10), configured for influencing the environmental condition and modifying it in a way depending on said at least one environmental condition control signal (SC1-SC3).

2. Movable wall (1) according to claim 1, comprising housing means (60) adapted to house at least one of said sensor means (20), control means (30) and actuating means (40), so that said at least one of said means is integrated within the wall structure (10).

3. Movable wall (1) according to claim 1, further comprising environmental condition setting means (50) configured for interoperating with the actuating means (40) and the control means (30) based on user controls so as to influence the environmental condition.

4. Movable wall (1) according to claim 1, wherein said environmental condition belongs to a group comprising:
- temperature;
- humidity;
- light level;
- pressure;
- sound level.

5. Movable wall (1) according to claim 1, wherein said environmental condition sensor module (20) belongs to a group comprising:
- temperature sensor or thermometer (21);
- pressure sensor or barometer (22);
- humidity sensor or hygrometer (23);
- light level sensor or photocell (24);
- sound condition sensor or phonometer (25).

6. Movable wall (1) according to claim 1, wherein said actuating means (40) belong to a group comprising:
- adjustable conditioned air distribution unit (41);
- heating module;
- ventilator module or fan;
- humidification module or humidifier (42);
- lighting module or lamp (43);
- variable configuration sound-absorbing module (44).

7. Movable wall (1) according to claim 6, wherein the adjustable conditioned air distribution unit (41) comprises:
- at least one conditioned air conduit (410) built in the wall, set up for conducting conditioned and/or humidified air, said conduit (410) comprising at least one delivery outlet (411) having a respective opening to the environment, of adjustable size, adapted to deliver the conditioned and/or humidified air;
- opening adjustment means (412) configured for adjusting the adjustable size of the opening of the at least one delivery outlet (411) based on one of said at least one environmental condition control signal (SC1-SC3);
- at least one inlet opening and at least one outlet opening respectively connected to said air conduit (410) for letting the conditioned and/or humidified air enter in and come out of said conduit (410), respectively.

8. Movable wall (1) according to claim 1, wherein the control module (30) comprises an electronic processor (31), an input control interface (32) for receiving the at least one environmental condition electrical measurement signal (SM1-SM3), and an output control interface (33), for providing the at least one environmental condition control signal (SC1-SC3).

9. Movable wall (1) according to claim 1, wherein the control module (30) is set up for receiving a plurality of environmental condition electrical measurement signals (SM1-SM3), corresponding to a plurality of respective environmental conditions, and is configured for generating the at least one control signal (SC1-SC3) based on a combination of said plurality of electrical measurement signals (SM1-SM3).

10. Movable wall (1) according to claim 1, comprising at least a first external interface (34) configured for receiving at least one further environmental condition electrical signal (SME) from outside the wall.

11. Movable wall (1) according to claim 1, comprising at least a second external interface (35) configured for providing at least one further environmental condition control signal (SCE) outwards the wall.

12. Movable wall (1) according to claim 1, wherein the wall structure (10) is a modular structure comprising at least one panel module (11), and further comprising a technical module (12) comprising at least one of said housing means (60).

13. System for optimising the environmental conditions (100) in variably sized spaces, comprising:
- at least one movable wall (1) according to claim 10;
- connecting means for electrical signals (77);
- external environmental condition sensing means (29), configured for:
measuring a value of a respective environmental condition;
generating at least one further environmental condition electrical measurement signal (SME) according to the measured value; and
sending the at least one further generated electrical signal (SME) to the at least one movable wall (1), through said connecting means for electrical signals (77);
and wherein the control module (30) of said movable wall (1) is configured for receiving the at least one further electrical signal (SME) and for generating an environmental condition control signal (SC1-SC3) depending on the further measurement signal (SME).

14. System for optimising the environmental conditions (100) in variably sized spaces, comprising:
- at least one movable wall (1) according to claim 11;
- further connecting means for electrical signals (78);
- external actuating means (49) configured for influencing the environmental condition and modifying it in a way depending on a further control signal (SCE);
and wherein the control module (30) of said movable wall (1) is configured for sending said further control signal (SCE) to the at least one external actuating module (49) through said further connecting means for electrical signals (78).

15. System for optimising the environmental conditions (100) in variably sized spaces, comprising:
- at least one movable wall (1) according to claim 7;
- external conditioned air delivery means;
- external conditioned air generation means configured for generating conditioned and/or humidified air and for delivering it into said external conditioned air delivery means;
and wherein the at least one air conduit (410) of the conditioned air distribution unit (41) of the movable wall (1) is configured for being connected to said external conditioned air delivery means by at least one of the inlet opening and outlet opening of the air conduit.

16. Method for optimising the environmental conditions in a variably sized space, comprising:
- defining a variably sized space by at least one movable wall (1) according to any one of claims 1 to 12;
- measuring a value of a respective environmental condition by means of environmental condition sensor means (20) comprised within said at least one movable wall (1);
- generating at least one respective environmental condition electrical measurement signal (SM1-SM3) by the environmental condition sensor means (20);
- providing the at least one environmental condition electrical measurement signal (SM1-SM3) to control means (30) comprised within said at least one movable wall (1);
- generating at least one environmental condition control signal (SC1-SC3), by the control means (30), based on said at least one environmental condition electrical measurement signal (SM1-SM3);
- influencing the environmental condition and modifying it in a way depending on said at least one environmental condition control signal (SC1-SC3) by actuating means (40) comprised within the at least one movable wall (1).
